# EUROPÄISCHE PATENTANMELDUNG

(11) **EP 1 059 474 A2**
(43) Veröffentlichungstag der Anmeldung: **13.12.2000**
(21) Anmeldenummer: 00112081.5
(22) Anmeldetag: 05.06.2000
(51) Int. Cl.: F16J 13/18

(54) **Deckel für einen Druckkessel**

(30) Priorität: 10.06.1999 DE 29910003 U
(71) Anmelder: Feldbinder & Beckmann Fahrzeugbau GmbH & Co. KG, 21423 Winsen (DE)
(72) Erfinder: Beckmann, Jan-Dirk, 21423 Winsen/Luhe (DE); Feldbinder, Otto, 29643 Neuenkirchen (DE)
(74) Vertreter: Richter, Werdermann & Gerbaulet

(57) **Zusammenfassung**

Um einen Deckel (100) für einen Druckkessel, insbesondere Tankbehälter, mit einem druckkesselseitigen Flanschbereich (16) zu verbessern wird dieser mit einem den Flanschbereich (16) ausbildenen Ringteil (10) einer Tragschale (14) und einer Stützschale (12) versehen, wobei die Tragschale (14) und die Stützschale (12) mit ihren umlaufenden Rändern mit dem Ringteil (10) verbunden sind.

## Beschreibung

Die Erfindung betrifft einen Deckel für einen Druckkessel, insbesondere Tankbehälter, mit einem druckkesselseitigen Flanschbereich gemäß dem Oberbegriff des Anspruchs 1.

Derartige Deckel dienen zum lösbar druckdichten Verschließen von Druckkesseln, beispielsweise von auf Kraftfahrzeugen montierten Tankbehältern, und sind zur Aufnahme eines entsprechenden Druckes ausgelegt.

Es ist Aufgabe der vorliegenden Erfindung, einen Deckel der obengenannten Art weiter zu verbessern.

Diese Aufgabe wird durch einen Deckel der o.g. Art mit den in Anspruch 1 gekennzeichneten Merkmalen gelöst.

Dazu ist es der Deckel gekennzeichnet durch ein den Flanschbereich ausbildendes Ringteil, eine Tragschale und eine Stützschale, wobei die Tragschale und die Stützschale mit ihren umlaufenden Rändern mit dem Ringteil verbunden sind.

Dies hat den Vorteil, dass ein einfach und kostengünstig herzustellender Deckel zur Verfügung steht, da die Elemente des Deckels, nämlich Ringteil, Stützschale und Tragschale einzeln herstellbar und in einem abschließenden Montageschritt miteinander verbindbar sind. Dieser Deckel hat durch das Vorsehen von zwei Schalen, nämlich Stützschale und Tragschale, ein erhöhte Festigkeit mit zusätzlich erhöhter Sicherheit, da bei Undichtigkeit beispielsweise der Tragschale die Stützschale noch eine Abdichtung zur Verfügung stellt. Gleichzeitig können mit wenigen verschiedenen Elementen unterschiedliche Deckel für unterschiedliche Anwendungsgebiete und Betriebsumgebungen hergestellt werden, indem bei der Endmontage einfach unterschiedliche Trag- bzw. Stützschalen mit dem Ringteil bzw. unterschiedliche Ringteile mit gleichen Trag- und Stützschalen kombiniert werden.

Ein weiterer Vorteil ist, dass beide Schalen bei dieser Konstruktionsweise aus kaltgewalztem Edelstahl eingesetzt werden. Dieses Material erhält durch das Polieren eine extrem glatte Oberfläche. Im Anwendungsbereich 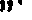 Lebensmittel" wird eine dauerhaft sterile Oberfläche erzielt, im Anwendungsbereich 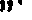 Chemie" führt die glatte Oberfläche zu erhöhter Korrosionsbeständigkeit.

Vorzugsweise Weitergestaltungen der Vorrichtung sind in den Ansprüchen 2 bis 10 beschrieben.

In einer bevorzugten Ausführungsform ist die Stützschale mit einem dem Druckkessel abgewandten umlaufenden Rand des Ringteiles und die Tragschale mit einem inneren umlaufenden Rand des Ringteiles verbunden, so dass die Tragschale zwischen dem Druckkessel und der Stützschale, d.h. druckseitig, angeordnet ist.

Zum dichtenden schließen des Flanschbereiches bei aufgesetztem Deckel ist an einer dem Druckkessel zugewandten Seite des Ringteiles eine umlaufende Nut zur Aufnahme einer Dichtung ausgebildet.

Eine verbesserte Stabilität des Deckels erzielt man dadurch, dass die Stützschale in einem vom Ringteil beabstandeten Bereich auf der Tragschale aufliegt. Hierdurch wird eine Druckfestigkeit des Deckels bei gleichbleibender Wandstärke des Tragschale erhöht.

In einer bevorzugten Ausführungsform ist an einem äußeren umlaufenden Rand des Ringteiles wenigstens eine Haltenase und/oder ein Handgriff angeordnet, insbesondere angeschweißt.

Zum schwenkbaren Befestigen des Deckels am Druckkessel ist an einem äußeren umlaufenden Rand des Ringteiles ein Scharnierteil angeordnet, insbesondere angeschweißt.

Zweckmäßigerweise sind die Stützschale und die Tragschale an dem Ringteil angeschweißt.

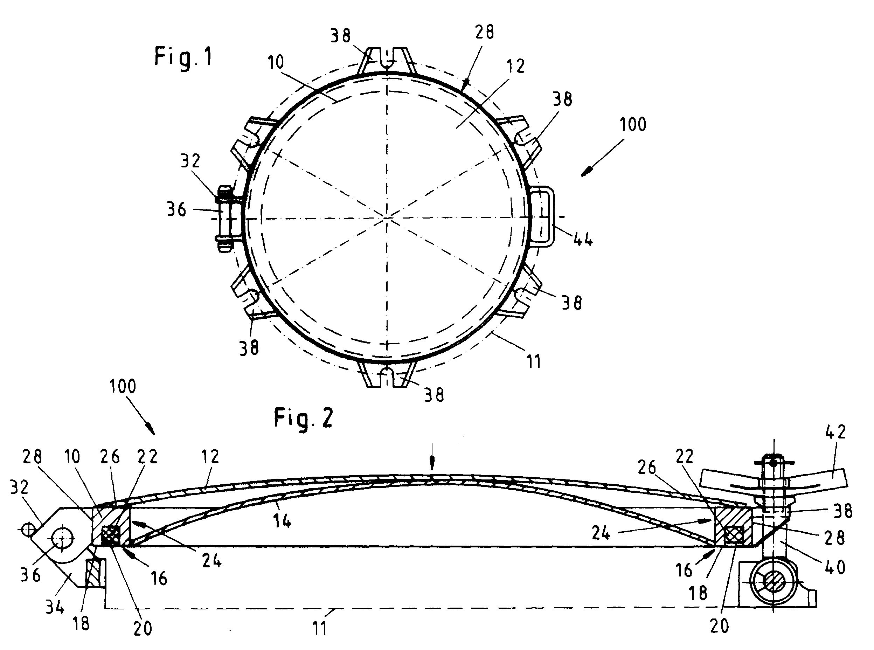

Nachstehend wird die Erfindung anhand der beigefügten Zeichnungen näher erläutert. Es zeigen
- Fig. 1: eine bevorzugte Ausführungsform eines erfindungsgemäßen Deckels in Aufsicht und
- Fig. 2: eine bevorzugte Ausführungsform eines erfindungsgemäßen Deckels in Schnittansicht.

Die in den Fig. dargestellte bevorzugte Ausführungsform eines erfindungsgemäßen Deckels 100 für einen Druckkessel 11 ist aus drei einzelnen Elementen zusammengeschweißt, nämlich aus einem Ringteil 10, einer bzgl. des Druckkessels 11 außenseitigen Stützschale 12 und eine bzgl. des Druckkessels 11 innenseitigen Tragschale 14. Das Ringteil 10 bildet druckkesselseitig einen Flanschbereich 16 mit einem druckkesselseitigen umlaufenden Rand 18 aus. Dieser Rand 18 weist eine umlaufende Nut 20 zur Aufnahme einer Dichtung 22 auf.

Das Ringteil 10 definiert ferner einen inneren umlaufenden Rand 24, einen dem Druckkessel 11 abgewandten umlaufenden Rand 26 und einen äußeren umlaufenden Rand 28. Die Stützschale 12 ist mit ihrem Randbereich mit dem dem Druckkessel 11 abgewandten umlaufenden Rand 36 des Ringteiles 10 verschweißt, während die Tragschale 14 mit ihrem Randbereich mit dem inneren umlaufenden Rand 24 des Ringteiles 10 verschweißt ist. Die Tragschale 14 und die Stützschale 12 berühren sich an einem mittigen Bereich 30. Die Tragschale 14 nimmt eine durch einen Druck im Druckkessel 11 bedingte Kraft auf und leitet diese an das Ringteil 10 ab. Hierbei wird die Tragschale 14 zusätzlich von der Stützschale 12 gestützt. Falls die Tragschale 14 beispielsweise aufgrund einer Beschädigung undicht wird, nimmt die Stützschale 12 wenigstens vorübergehend den Druck auf, ohne dass Gas aus dem Druckkessel 11 entweicht. Ein beispielsweise zwischen der Tragschale 14 und der Stützschale 12 angeordneter, nicht dargestellter Druck- oder Gassensor signalisiert eine defekte Tragschale 14, so dass der Deckel 100 sobald wie möglich gewechselt wird.

Zum schwenkbaren Anlenken des Deckels 100 am Druckkessel 11 ist am äußern umlaufenden Rand 28 des Ringteiles 10 ein Scharnierteil 32 angeschweißt, welches mit einem entsprechenden druckkesselseitigen Scharnierteil 34 zusammenwirkt und eine Schwenkachse 36 für den Deckel 100 ausbildet. Ferner sind an dem äußern umlaufenden Rand 28 des Ringteiles 10 mehrere Haltenasen 38 zum Eingriff von an Schwingschrauben 40 gehalterten Drehklammern 42, welche die vom Druck im Druckkessel 11 bedingte Kraft von dem Ringteil 10 auf eine Wandung des Druckkessels 11 ableiten, festgeschweißt. Zusätzlich ist ein Handgriff 44 am äußeren umlaufenden Rand 28 des Ringteiles festgeschweißt.

### BEZUGSZEICHENLISTE

- 100: Deckel
- 10: Ringteil
- 11: Druckkessel
- 12: außenseitige Stützschale
- 14: innenseitige Tragschale
- 16: Flanschbereich
- 18: druckkesselseitiger umlaufenden Rand
- 20: umlaufende Nut
- 22: Dichtung
- 24: innerer umlaufenden Rand
- 26: dem Druckkessel abgewandter umlaufender Rand
- 28: äußerer umlaufenden Rand
- 30: mittiger Bereich
- 32: Scharnierteil
- 34: druckkesselseitiges Scharnierteil
- 36: Schwenkachse
- 38: Haltenasen
- 40: Schwingschrauben
- 42: Drehklammern
- 44: Handgriff

## Patentansprüche

1. Deckel (100) für einen Druckkessel, insbesondere Tankbehälter, mit einem druckkesselseitigen Flanschbereich (16),
gekennzeichnet durch
ein den Flanschbereich (16) ausbildendes Ringteil (10), eine Tragschale (14) und eine Stützschale (12), wobei die Tragschale (14) und die Stützschale (12) mit ihren umlaufenden Rändern mit dem Ringteil (10) verbunden sind.

2. Deckel nach Anspruch 1,
dadurch gekennzeichnet, dass
die Stützschale (12) mit einem dem Druckkessel abgewandten umlaufenden Rand (16) des Ringteiles (10) verbunden ist.

3. Deckel nach Anspruch 1 oder 2,
dadurch gekennzeichnet, dass
die Tragschale (14) mit einem inneren umlaufenden Rand (24) des Ringteiles (10) verbunden ist.

4. Deckel nach einem der vorhergehenden Ansprüche,
dadurch gekennzeichnet, dass
die Tragschale (14) zwischen dem Druckkessel und der Stützschale (12) angeordnet ist.

5. Deckel nach einem der vorhergehenden Ansprüche,
dadurch gekennzeichnet, dass
an einer dem Druckkessel zugewandten Seite (18) des Ringteiles (10) eine umlaufende Nut (20) zur Aufnahme einer Dichtung (22) ausgebildet ist.

6. Deckel nach einem der vorhergehenden Ansprüche,
dadurch gekennzeichnet, dass
die Stützschale (12) in einem vom Ringteil (10) beabstandeten Bereich auf der Tragschale (14) aufliegt.

7. Deckel nach einem der vorhergehenden Ansprüche,
dadurch gekennzeichnet, dass
an einem äußeren umlaufenden Rand (28) des Ringteiles (10) wenigstens eine Haltenase (38) angeordnet, insbesondere angeschweißt, ist.

8. Deckel nach einem der vorhergehenden Ansprüche,
dadurch gekennzeichnet, dass
an einem äußeren umlaufenden Rand (28) des Ringteiles (10) wenigstens ein Handgriff (40) angeordnet, insbesondere angeschweißt, ist.

9. Deckel nach einem der vorhergehenden Ansprüche,
dadurch gekennzeichnet, dass
an einem äußeren umlaufenden Rand (28) des Ringteiles (10) ein Scharnierteil (32) angeordnet, insbesondere angeschweißt, ist.

10. Deckel nach einem der vorhergehenden Ansprüche,
dadurch gekennzeichnet, dass
die Stützschale (12) und die Tragschale (14) an dem Ringteil (10) angeschweißt sind.
